# EUROPÄISCHE PATENTSCHRIFT

(11) **EP 1 407 916 B1**
(45) Veröffentlichungstag und Bekanntmachung des Hinweises auf die Patenterteilung: **05.09.2007**
(21) Anmeldenummer: 03022004.0
(22) Anmeldetag: 30.09.2003
(51) Int. Cl.: B60K 31/00

(54) **Kraftfahrzeug**
Vehicle
Véhicule

(30) Priorität: 11.10.2002 DE 10247662
(43) Veröffentlichungstag der Anmeldung: 14.04.2004
(73) Patentinhaber: AUDI AG, 85045 Ingolstadt (DE)
(72) Erfinder: Buschardt, Boris, 85049 Ingolstadt (DE)
(74) Vertreter: Thielmann, Frank

(56) Entgegenhaltungen:
- EP-A- 0 736 414
- US-A- 4 348 652

## Beschreibung

Die Erfindung betrifft ein Kraftfahrzeug mit einer Einrichtung zur Erfassung von Fahrbahnmarkierungen sowie zum Ausgeben einer Warninformation in Abhängigkeit der Position des Kraftfahrzeugs bezüglich einer Fahrbahnmarkierung.

Gattungsgemäße Kraftfahrzeuge mit einem solchen Fahrerassistenzsystem, welche vor dem ungewollten Verlassen einer Fahrspur warnt, sind bekannt z.B. EP 0736414 A2. Ein solches Fahrerassistenzsystem wird in der Regel LDW-System genannt (LDW=Lane-Departure-Warning). Es umfasst häufig eine nach vorne ausgerichtete, hinter der Frontscheibe angeordnete Kamera, die kontinuierlich das Fahrzeugvorfeld aufnimmt sowie eine ihr nachgeschaltete Bildverarbeitungseinrichtung, die das aufgenommene Bild nach Fahrspurmarkierungen, also z.B. die linken und rechten Fahrbahnbegrenzungen oder auf Autobahnen die mittleren Linien analysiert. Ergibt sich aus dieser Analyse und dem hierüber ermittelten Weg, den die Fahrbahn beschreibt, dass das Kraftfahrzeug im Begriff ist die Fahrbahn zu verlassen, so wird ein Warnsignal, z.B. ein Ton ausgegeben, das dem Fahrer dies signalisiert. Hierbei wird der Kraftfahrer nur einmal gewarnt, und zwar vor oder beim Überfahren der Fahrspurbegrenzung mit der der Markierung näheren Fahrzeugseite bzw. den näheren Rädern. Driftet das Fahrzeug also nach links, so erfolgt die Warnung dann, wenn die linke Fahrzeugseite oder die beiden linken Räder oder nur das linke Vorderrad nahe genug an der Fahrbahnmarkierung ist bzw. diese bereits überfahren ist.

Für den Kraftfahrer ist dies nachteilig, denn es ist nicht sichergestellt, dass die einmal gegebene Warninformation tatsächlich auch wahrgenommen wird. Dies kann beispielsweise der Fall sein, wenn hinreichend hohe Hintergrundgeräusche gegeben sind oder der Kraftfahrer sich im Moment auf etwas anderes konzentriert.

Der Erfindung liegt daher das Problem zugrunde, ein Kraftfahrzeug anzugeben, das diesbezüglich Abhilfe schafft.

Dieses Problem wird mit einem Kraftfahrzeug mit dem Merkmalen aus Anspruch 1 gelöst, insbesondere ist erfindungsgemäß vorgesehen, dass die Einrichtung zum Ermitteln der Position je eines ausgewählten Fahrzeugabschnitts im Bereich der rechten und im Bereich der linken Fahrzeughälfte bezüglich einer Fahrbahnmarkierung sowie zum Geben separater, seitenspezifischer Wareninformationen bei Ermittlung einer die Informationsgabe auslösenden Position des einen oder anderen seitenspezifischen Fahrzeugabschnitts bezüglich der Fahrbahnmarkierung ausgebildet ist.

Die erfindungsgemäße Einrichtung ermöglicht es, den Fahrer zweimal zu warnen, nämlich das erste Mal dann, wenn er z.B. bei einem Linksdrift mit dem der linken Fahrzeughälfte zugeordneten Fahrzeugabschnitt nahe genug der Fahrbahnmarkierung ist oder diese bereits überfahren hat. Eine zweite Warninformation erhält er, wenn er weiter nach links driftet und dabei der der rechten Fahrzeughälfte zugeordnete Fahrzeughälfte hinreichend nahe der Fahrbahnmarkierung kommt oder diese bereits überfährt. Während sich die Fahrbahnmarkierung zwischen den beiden Fahrzeugabschnitten, also unterhalb des Fahrzeugs befindet, wird kein Warnsignal gegeben. Der Fahrer erhält also zwei definierte Warnsignale. Hierdurch wird sichergestellt, dass er auch tatsächlich alarmiert wird, da es unwahrscheinlich ist, dass er beide Warnsignale nicht wahrnimmt. Darüber hinaus wird hierdurch eine Signalabfolge nachvollzogen, die er bereits kennt, wenn er Fahrbahnmarkierungen überfährt. So werden häufig im Baustellenbereich oder in Gefahrenbereichen auch im Ausland Querrillen in den Fahrspurmarkierungen vorgesehen oder die bekannten kleinen linsenförmigen Erhebungen angebracht. Überfährt nun der Fahrer eine solche Fahrspurmarkierung, so nimmt er dies akustisch wie auch haptisch ein erstes Mal wahr wenn er z.B. mit den beiden linken Rädern über diese "mechanische" Markierung fährt. Ein zweites Mal nimmt er diese wahr, wenn er mit den beiden rechten Rädern darüber fährt. Es ergibt sich bekanntermaßen ein relativ auffälliges Geräusch während des Überfahrens, darüber hinaus spürt man das überfahrbedingte Rütteln insbesondere bei den linsenförmigen Erhebungen primär leicht am Lenkrad. Dadurch, dass nunmehr erfindungsgemäß durch aktive Überwachung des Bewegungsweges des Kraftfahrzeugs bezüglich der Fahrbahn bzw. der Fahrbahnmarkierungen eine doppelte Warnstrategie realisiert ist, wird dem Fahrer also das ihm bekannte, quasi straßenbaulich bedingte Signalverhalten nachvollzogen. Durch die Analogie zum Überfahren von Querrillen oder den linsenförmigen Erhebungen in der Fahrbahnmarkierung wird somit vorteilhaft eine intuitiv verständliche Warnung gewährleistet und die Gefahr von Fehlinterpretationen oder aber generell die Gefahr einer Missachtung reduziert.

Als Fahrzeugabschnitt kann die rechte oder die linke Fahrzeugaußenkante oder ein rechter oder linker Fahrzeugreifen berücksichtigt werden. Es ist eine Frage der Konzeptionierung des Bildverarbeitungssystems, wie der Fahrzeugsabschnitt definiert wird. Das Bildverarbeitungssystem muss in der Lage sein, aus den durch Analyse gewonnenen Bilddaten unter Berücksichtigung der bekannten Fahrzeuggeometrie und dadurch der Lage des relevanten Fahrzeugabschnitts eine mögliche Gefahrensituation ermitteln zu können. Dies geschieht unter Verwendung geeigneter Berechnungs- und Analysealgorithmen, also auf Basis geeigneter Verarbeitungssoftware, innerhalb welcher die relevanten Fahrzeugabschnitte beliebig definiert werden können.

Wie beschrieben umfasst die Einrichtung zweckmäßigerweise eine Kamera und eine Bildverarbeitungseinrichtung zum kontinuierlichen Aufnehmen des Fahrzeugvorfelds, zum Erfassen einer im Bild gezeigten Fahrbahnmarkierung sowie zum kontinuierlichen Ermitteln der Position eines ausgewählten Fahrzeugabschnitts bezüglich der Fahrbahnmarkierung. Die Gabe der Warnung erfolgt, wenn sich im Rahmen der Positionsermittlung herausgestellt hat, dass ein Fahrzeugabschnitt nahe genug an der Fahrbahnmarkierung ist, so dass die Gefahr eines nachfolgenden Überfahrens der Fahrbahnmarkierung latent ist, oder wenn die Positionsermittlung ergibt, dass die Fahrbahnmarkierung gerade überfahren wird.

Dabei ist die Einrichtung zweckmäßigerweise zum Ermitteln der Zeitspanne, bis sich der näher zur Fahrbahnmarkierung befindliche Fahrzeugabschnitt in einer die Warninformation auslösenden Position befindet, unter Berücksichtigung wenigstens eines Fahrparameters ausgebildet, wobei die Gabe der Warninformation erfolgt, wenn die Zeitspanne gleich einer vorgegebenen Mindestzeitspanne ist. Im Fahrzeug sind eine Reihe von Fahrzeugsensoren vorgesehen, die alle nötigen Parameter zur Verfügung stellen, die erforderlich sein können. Z.B. ist ein Geschwindigkeitssensor vorhanden, da die Ist-Geschwindigkeit ausschlaggebend für die Ermittlung der Zeitspanne ist. Auch sind z.B. Sensoren zur Erfassung des Lenkwinkels und dergleichen vorhanden, die ebenfalls Informationen liefern, die diesbezüglich relevant sein können. Die Einrichtung ermittelt nun quasi vorausschauend den Lauf der Markierung, was durch die Bildanalyse einfach möglich ist, da die Markierung sich im aufgenommen Bild fortsetzt. Ferner wird vorausschauend der Verlauf des Weges des Fahrzeugs berechnet, was zum einen anhand der Position des Fahrzeugs bezüglich der Fahrbahnmarkierung oder bezüglich der Fahrbahn selbst und zum anderen unter Berücksichtigung beispielsweise geeigneter Parameter zum Lenkwinkel und dergleichen erfolgt. Hieraus kann dann ermittelt werden, wann das Fahrzeug unter Beibehaltung des Fahrweges nahe genug einer Fahrbahnmarkierung wäre oder diese überfahren würde. Ist diese Zeitspanne nun kleiner als eine vorgegebenen Mindestzeitspanne, kann davon ausgegangen werden, dass die Ist-Position, also die Momentanposition des Fahrzeugs bereits sehr nahe der Markierung ist bzw. die Markierung bereits überfahren wird und das Signal ausgegeben werden muss. Auch hier ist also stets die konkret ermittelte Ist-Position des Kraftfahrzeugs die Basis für die mögliche Signalgabe, da die Randbedingung, dass die Signalgabe nur dann erfolgt, wenn die Zeitspanne kleiner oder gleich der Mindestzeit ist, nur dann erfüllt wird, wenn die Ist-Position nahe genug der Markierung ist. Nachdem aufgrund der kontinuierlichen Bildaufnahme und Auswertung die Positionsdatenermittlung dauernd aktualisiert wird, kann so kontinuierlich eine mögliche Annäherung an eine Fahrbahnmarkierung, die letztlich zur Warnsignalgabe führen kann, erfasst werden.

In Weiterbildung der Erfindung kann vorgesehen sein, dass die Einrichtung zur Berücksichtigung einer zusätzlichen Zeitspanne oder eines Zeitfaktors ausgebildet ist, wobei die zusätzliche Zeitspanne additiv mit der Mindestzeitspanne verknüpft wird oder der Zeitfaktor mit der Mindestzeitspanne multipliziert wird, und wobei die Berücksichtigung in Abhängigkeit wenigstens eines Fahrzeugparameters erfolgt. Hierüber kann quasi eine "Sicherheitszeit" mit berücksichtigt werden, die der Fahrer z.B. zum Reagieren braucht, beispielsweise dann, wenn er mit relativ hoher Geschwindigkeit fährt. Denn in einem solchen Fall würde, wenn die Warnung dann ausgegeben wird, wenn die Fahrbahnmarkierung tatsächlich überfahren wird, dem Kraftfahrer nur sehr wenig Zeit zum Reagieren bleiben, um beispielsweise wieder zurückzulenken. Dadurch dass die Zeitspanne oder der Zeitfaktor berücksichtigt werden und damit de facto die Mindestzeit erhöht und somit quasi eine Vorwarnzeit eingeführt wird, kann der Kraftfahrer frühzeitig auf die mögliche Gefahrensituation hingewiesen werden, so dass er trotz hoher Fahrgeschwindigkeit reagieren kann. Als weiterer möglicherweise zu berücksichtigender Fahrzeugparameter kann ein Gierwinkelfehler des Fahrzeugs berücksichtigt werden.

Alternativ zur Ermittlung eines möglichen Überfahrens auf Basis einer Zeitspanne beziehungsweise einer zusätzlichen Zeitspanne und eines Zeitfaktors kann eine mögliche Überfahrt auch auf Basis eines Weges beziehungsweise Abstands des Fahrzeugs ermittelt werden. Hierzu kann die Einrichtung zum Ermitteln der Wegstrecke, bis sich der näher zur Fahrbahnmarkierung befindliche Fahrzeugabschnitt in einer die Warninformationsgabe auslösenden Position befindet, unter Berücksichtigung wenigstens eines Fahrparameters ausgebildet sein, wobei die Gabe der Warninformation erfolgt, wenn die Wegstrecke gleich einer vorgegebenen Mindestwegstrecke ist. Das heißt, es wird in diesem Fall quasi vorausschauend der Weg des Fahrzeugs berechnet, bis es möglicherweise in eine eine Warnsignalgabe auslösende Position gerät. Dies ist ohne weiteres auf Basis der Ist-Position des Kraftfahrzeugs sowie der sonstigen vorliegenden Bild- und Fahrzeugparameterinformationen möglich. Ist diese ermittelte Wegstrecke nun kleiner als eine Mindestwegstrecke, so wird ein Signal ausgegeben. Darüber hinaus kann, wie auch bei der Ermittlung einer Warninformationsgabe auf Basis der Zeit, die Einrichtung zur Berücksichtigung einer zusätzlichen Wegstrecke oder eines Wegfaktors ausgebildet sein, wobei die zusätzliche Wegstrecke additiv mit der Mindestwegstrecke verknüpft wird, oder der Wegfaktor mit der Mindestwegstrecke multipliziert wird, und wobei die Berücksichtigung in Abhängigkeit wenigstens eines Fahrzeugparameters erfolgt. Auch im Falle der Ermittlung der Warensignalgabe auf Basis der Wegstrecke kann also quasi ein "Sicherheitsweg" mit berücksichtigt werden, den der Fahrer zum Reagieren braucht, beispielsweise dann, wenn er mit relativ hoher Geschwindigkeit fährt. Er erhält also auch hier hinreichend frühzeitig eine Warnung. Auch hier kann als möglicherweise zu berücksichtigender Fahrzeugparameter die Geschwindigkeit oder ein Gierwinkelfehler des Fah rzeugs berücksichtigt werden.

Zweckmäßig ist es, wenn die seitenspezifischen Warninformationen unterschiedlich sind, so dass der Kraftfahrer - zumindest nach einer gewissen Gewöhnungszeit - genau unterscheiden kann, ob er nun mit der rechten oder mit der linken Fahrzeugseite eine Fahrbahnmarkierung überfährt. Die Warninformationen selbst können akustischer Art sein, z.B. Warnsignale in Form von Piepstönen oder Ähnliches, sie können optischer Art sein wie z.B. blinkende Warnlampen, oder aber haptischer Art, z. B. in Form einer Lenkradvibration, einer Sitzvibration oder synthetischer Lenkmomentänderungen. Natürlich können auch gleichartige seitenspezifische Warninformationen, also für die linke und rechte Seite gleiche Warntöne oder dergleichen gegeben werden.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: zeigt ein erfindungsgemäßes Kraftfahrzeug in Form einer Prinzipskizze zur Darstellung der wesentlichen Benutzungskomponenten,
- Fig. 2: eine Prinzipdarstellung einer ersten Fahrsituation,
- Fig. 3: eine Prinzipdarstellung einer zweiten Fahrsituation,
- Fig. 4: eine Prinzipdarstellung einer dritten Fahrsituation.

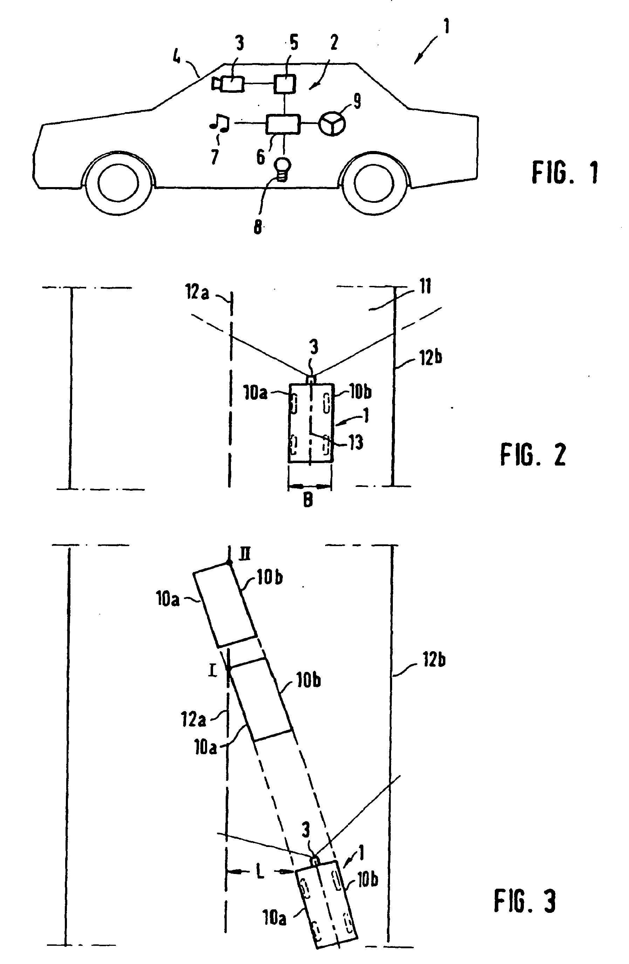

Fig. 1 zeigt ein erfindungsgemäßes Kraftfahrzeug 1 umfassend eine Einrichtung 2 zur Ermittlung einer etwaigen gefahrbringenden Annäherung des Kraftfahrzeugs an eine Fahrbahnmarkierung oder ein Überfahren derselben sowie zur Gabe eines Warnsignals. Die Einrichtung 2 umfasst eine Kamera 3, die zur Frontscheibe 4 des Kraftfahrzeugs ausgerichtet ist und die Fahrbahn vor dem Fahrzeug aufnimmt. Die von ihr aufgenommenen Bilder werden einer Bildverarbeitungseinheit 5 gegeben, die unter Verwendung geeigneter Analysealgorithmen die Bilder hinsichtlich der Fahrbahnmarkierungen analysiert und unter Berücksichtigung geometrischer Daten des Kraftfahrzeugs ermittelt, ob und wenn ja welcher definierte Fahrzeugabschnitt der rechten oder linken Fahrzeughälfte unzulässig nahe bezüglich einer Fahrbahnmarkierung ist. Wird eine solche Situation ermittelt, so wird dies z.B. an ein Steuergerät 6 gegeben, das dann die Gabe eines Warnsignals auslöst. Dies kann z.B. dadurch erfolgen, dass ein akustisches Signal 7 gegeben wird, z.B. über die ohnehin im Fahrzeug integrierte Lautsprecheranlage des Radio- oder CD-Systems. Alternativ kann eine optische Warninformation 8, z.B. durch Ansteuern geeigneter blinkender Warnleuchten oder dergleichen gegeben werden. Schließlich kann eine haptische Warninformation 9 gegeben werden, z.B. durch Ansteuern einer im Lenkrad integrierten Vibrationseinrichtung.

Sobald sich der definierte Fahrzeugabschnitt von der Fahrbahnmarkierung wegbewegt hat, wird die Signalgabe wieder unterbrochen. Wird nun vom Kraftfahrzeug z.B. die zwei Fahrspuren trennende Mittellinie überfahren (wie dies z.B. beim Überholen auf Landstraßen oder beim Fahrspurwechsel auf Autobahnen der Fall ist), so wird nach Gabe der ersten Warninformation beim Überfahren der Mittellinie mit der linken Fahrzeughälfte beim Überfahren mit dem Fahrzeugabschnitt, der der rechten Fahrzeughälfte zugeordnet ist, ein zweites Warnsignal gegeben. Der Kraftfahrer wird also zweimal bezüglich der Überfahrt der Fahrbahnmarkierung gewarnt. Dabei können die seitenspezifischen Warninformationen unterschiedlich sein, z.B. können Töne unterschiedlicher Tonlagen gegeben werden, auch können unterschiedliche Blinklichter angesteuert werden etc. Daneben können auch unterschiedliche Fahrzeugabschnitte definiert werden. Als Fahrzeugabschnitt, dessen Position bezüglich einer Fahrbahnmarkierung erfasst wird, kann z.B. die linke oder rechte Außenkante des Kraftfahrzeugs dienen, wobei - nachdem diese bekanntermaßen gewölbt ist - ein dort definierter Punkt gewählt wird. Alternativ dazu kann auch z.B. das rechte oder linke Vorderrad gewählt werden. Dies ist eine Frage der Auslegung der Software, die die letztendliche Positionsermittlung vornimmt. Abschließend ist noch darauf hinzuweisen, dass die Ermittlung der Ist-Position des Fahrzeugs bezüglich einer Fahrbahnmarkierung und letztlich die Entscheidung ob ein Warnsignal zu geben ist, natürlich auch in dem Steuergerät erfolgen kann, das die Analyseergebnisse der Bildverarbeitungseinrichtung 5 erhält.

Fig. 2 zeigt in Form einer Prinzipskizze eine gewöhnliche Fahrsituation eines Kraftfahrzeugs 1. Es sei angenommen, dass als rechts- und linksseitig definierte Fahrzeugabschnitte die Außenkanten 10a und 10b definiert sind, wobei im gezeigten Ausführungsbeispiel das Fahrzeugs als einfaches Rechteck dargestellt ist. Über die Kamera 3 wird nun die Fahrbahn 11 aufgenommen. Die Fahrbahn 11 ihrerseits ist durch linke und rechte Markierungen 12a, 12b begrenzt. Die Bildverarbeitungseinrichtung 5 detektiert nun diese Fahrbahnmarkierungen 12a (hier die gestrichelte Mittellinie) und 12b (hier die durchgezogene rechte Randbegrenzung). Berechnet die Fahrbahnbreite und ermittelt anhand der ihr bekannten geometrischen Fahrzeugdaten, wie das Kraftfahrzeug 1 bezüglich der Fahrbahn 11 respektive der beiden Fahrbahnmarkierungen 12a, 12b positioniert ist. Dies geschieht zweckmäßigerweise dadurch, dass - nachdem die Kamera 3 primär exakt in der Fahrzeugmitte angeordnet ist - die Lage der strichpunktiert gezeigten Fahrzeugmittellinie 13 bezüglich der Fahrbahn 11 bzw. der Fahrbahnmarkierungen 12a, 12b erfasst wird. Nachdem dem Kraftfahrzeug die Fahrzeugbreite B bekannt ist, kann nun auf einfache Weise die Position bzw. der Winkel der jeweiligen Außenkanten 10a, 10b zur Markierung errechnet werden, wobei die jeweilige Kante um B/2 von der Mittellinie 13 beabstandet ist (der Winkel ergibt sich aus der Lage der Mittellinie zur Markierung, die sich wiederum im Bild dadurch zeigt, wie die Markierung im Bild verläuft, da die Kamera starr in der Mitte angeordnet ist). Ist nun die Position bzw. Winkelstellung des Kraftfahrzeugs bezüglich der Fahrbahn 11 respektive der Fahrbahnmarkierungen 12a, 12b bekannt, kann ermittelt werden, wie unter Beibehaltung dieser Fahrrichtung (also ohne Verändern des Lenkwinkels) der weitere Fahrweg wäre, und ob dieser weitere Fahrweg und damit auch die darüber bekannte "vorausschauend" ermittelte Position der Fahrzeugabschnitte 10a, 10b mit der einen oder anderen Fahrbahnmarkierung 12a, 12b kreuzen würden. Im Ausführungsbeispiel nach Fig. 2 steht das Kraftfahrzeug exakt mittig bezüglich der Fahrbahn 11 und im Wesentlichen parallel zu den Fahrbahnmarkierungen 12a, 12b, weshalb sich insoweit wenn überhaupt eine Kreuzung der prognostizierten Abschnittsbewegungswege mit den Fahrbahnmarkierungen nur in sehr weiter Entfernung ergeben würde. Die Gabe eines Warnsignals ist hier nicht erforderlich.

Anders gestaltet sich die Situation, wie sie Fig. 3 zeigt. Auch dort ist das Kraftfahrzeug 1 gezeigt, jedoch steht dies deutlich schräg bezüglich der Fahrbahn 11 bzw. der Fahrbahnmarkierungen 12a, 12b. Die Kamera 3 erfasst wiederum die Fahrbahn, die Bildverarbeitungseinrichtung 5 ermittelt zum einen die Lage der Fahrbahnmarkierungen 12a, 12b, zum anderen auch aufgrund der bekannten Geometrie des Fahrzeugs seine Lage bezüglich der Fahrbahn 11 bzw. der Fahrbahnmarkierungen 12a, 12b und damit eine etwaige Winkelstellung, die hier offensichtlich gegeben ist. Nun wird der Zeitpunkt ermittelt, bis zu welchem eine mögliche Kreuzung der prognostizierten Bewegungswege der Fahrzeugabschnitte 10a, 10b oder eines davon mit der Fahrbahnmarkierung 12a gegeben ist. Hierzu wird wie ausgeführt zunächst die Ist-Position des Fahrzeugs 1 ermittelt. In der in Fig. 3 unten gezeigten Ausgangsstellung befindet sicher der linke Fahrzeugabschnitt 10a hinreichend weit, nämlich um den Abstand L von der Fahrbahnmarkierung 12a entfernt. Wie durch die gestrichelte Linie dargestellt würde sich die prognostizierte Bewegungslinie des Fahrzeugabschnitts 10a im Punkt I mit der Fahrbahnmarkierung 12a schneiden, die des rechten Fahrzeugabschnitts 10b im Punkt II. Unter Berücksichtigung z.B. der Momentangeschwindigkeit des Fahrzeugs sowie der geometrischen Fahrzeugdaten bzw. der geometrischen Daten bezüglich der Fahrzeuglage relativ zu den Fahrbahnmarkierungen kann nun ermittelt werden, wie lange es dauern würde, bis das Fahrzeug den Punkt I erreichen würde. Ist nun diese Zeitspanne erfasst, wird verglichen, ob diese größer oder gleich einer Mindestzeitspanne ist. Diese Mindestzeitspanne definiert quasi den Moment der Signalauslösung. Je kleiner diese Mindestzeitspanne ist, desto näher muss der Fahrzeugabschnitt der Fahrbahnmarkierung 12a zur Signalauslösung sein, das heißt um so näher muss die Ist-Position diesbezüglich sein. Im gezeigten Ausführungsbeispiel ist ersichtlich das Fahrzeug 1 noch hinreichend weit vom Punkt I beabstandet, auch unter Berücksichtigung ggf. einer relativ hohen Fahrgeschwindigkeit, so dass im Moment die Ausgabe einer Warninformation unterbleiben kann.

Anders jedoch, wenn die Fahrt fortgesetzt wird und das Kraftfahrzeug 1 die nachfolgend gezeigte Position einnimmt, in der der Fahrzeugabschnit 10a im Wesentlichen im Punkt I angekommen ist. In diesem Fall ergibt sich natürlich, dass die Zeitspanne bis zum Erreichen dieses Punktes (der hier ja bereits erreicht ist) gleich oder kleiner der Mindestzeitspanne ist, mithin also eine Situation gegeben ist, in der unmittelbar das Überfahren der Fahrbahnmarkierung 12a droht. Nun wird das Warnsignal in der bereits beschriebenen Weise ausgegeben. Der Fahrer wird also zum ersten Mal über die potentielle Gefahrensituation informiert.

Nach Beendigung der Signalgabe, die z.B. für eine gewisse Zeitdauer erfolgend kann, und wenn sich die Fahrbahnmarkierung im Wesentlichen unterhalb des Fahrzeugs befindet, kommt - sofern der Fahrer nicht reagiert und zurücklenkt - kurz darauf der rechte Fahrzeugabschnitt 10b hinreichend nahe an die Fahrbahnmarkierung 12a, im gezeigten Beispiel ist er bereits am Punkt II angekommen. Auch diese Situation wird über die Einrichtung 2 erfasst, auch jetzt ist die Randbedingung erfüllt, dass die Ist-Position des Fahrzeugabschnitts 10b hinreichend nahe zur Fahrbahnmarkierung 12a ist, mithin also die Zeitspanne bis zum Erreichen dieser Position gleich oder kleiner der Mindestzeitspanne ist und die Signalgabe erfolgen muss. Der Fahrer wird also ein zweites Mal von der Gefahrensituation informiert.

Der Fahrer kann nun auf unterschiedliche Weise auf die erste oder zweite Warninformation reagieren. Entweder kann er zurücklenken, d.h. er ist aus Versehen nach links gedriftet. Dies kann bereits nach der Gabe der ersten Warninformation oder erst nach Gabe der zweiten Warninformation erfolgen. Da er in diesem Fall erneut die Fahrbahnmarkierung 12a überfahren muss, könnte ihm auch hier wiederum die Warninformationen gegeben werden, in diesem Fall jedoch quasi als Information, dass er die ungewollt überfahrene Fahrbahnmarkierung 12a wieder überfahren und er sich auf der gewünschten Fahrspur 11 befindet. Alternativ dazu kann natürlich das Überfahren der Fahrbahnmarkierung 12a auch bewusst ausgelöst worden sein, nämlich zum Überholen eines vorausfahrenden Kraftfahrzeugs oder einfach zum Spurwechsel auf der Autobahn. In diesem Fall wären beide Warninformationen zu ignorieren.

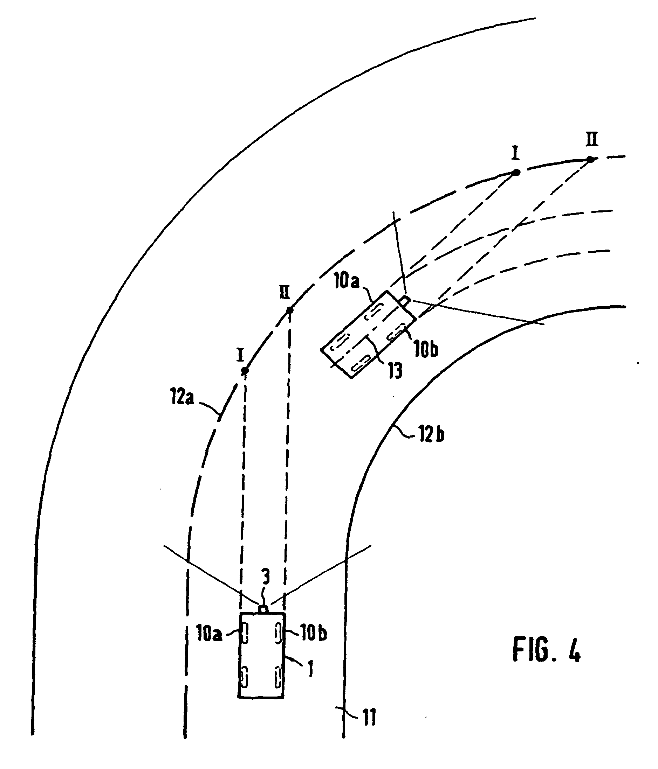

Fig. 4 zeigt eine weitere Fahrsituation, wie sie sich im Bereich einer Fahrbahnkurve ergibt. Auch hier befindet sich das Kraftfahrzeug 1 mit seinen Fahrzeugabschnitten 10a, 10b auf der Fahrbahn 11, die Kamera 3 erfasst auch hier den Fahrbahnverlauf, es erfolgt wie beschrieben die Ermittlung der Ist-Position des Fahrzeugs und damit der Fahrbahnabschnitte 10a, 10b bezüglich der Fahrbahnmarkierungen 12a, 12b sowie die Prognostizierung etwaiger Schnittpunkte oder der Bewegungswege mit den Fahrbahnmarkierungen. Im gezeigten Beispiel würde, wenn das Kraftfahrzeug 1 geradeausfahren würde, die Fahrbahnmarkierung 12a in den Punkten I und II überfahren werden. Nachdem aber die Ist-Position des Kraftfahrzeugs 1 bezüglich der Fahrbahn 11 sowie der Fahrbahnmarkierung 12a, 12b noch so ist, dass das Kraftfahrzeug sowie die Fahrbahnabschnitte 10a, 10b hinreichend von der hier relevanten Fahrbahnmarkierung 12a beabstandet sind, unterbleibt die Gabe des Warnsignals. Erst wenn die Fahrt ohne Änderung der Fahrtrichtung fortgesetzt werden würde, kommt man - wie bezüglich Fig. 3 beschrieben - irgendwann hinreichend nahe der Fahrbahnmarkierung und es wäre zu warnen.

Im gezeigten Ausführungsbeispiel jedoch verhält sich der Kraftfahrer richtig, er ändert den Lenkwinkel und fährt korrekt um die Kurve. Dies ist im oberen Teil von Fig. 4 dargestellt, wo sich ersichtlich die Ist-Position des Kraftfahrzeugs 1 geändert hat. Es befindet sich nach wie vor in einer korrekten, zulässigen Ist-Position bezüglich der Fahrbahnmarkierungen 12a, 12b. Auch in diesem Fall erfolgt eine kontinuierliche Vorausberechnung etwaiger Kreuzungspunkte mit einer Fahrbahnmarkierung. Hier tritt der Fall auf, dass das Kraftfahrzeug um eine Kurve fährt, mithin also die Vorderräder etwas eingeschlagen sind. Die Ermittlung etwaiger Kreuzungspunkte kann nun derart erfolgen, dass der Lenkwinkel unberücksichtigt bleibt und lediglich erfasst wird, wo etwaige Kreuzungspunkte I, II liegen würden, wenn das Fahrzeug bezogen auf die Ist-Ausrichtung der Mittellinie 13 geradeaus weiterfahren würde. Dies wäre im gezeigten Beispiel die in gerader Verlängerung sich ergebenden Kreuzungspunkte I, II. Alternativ dazu kann natürlich auch ein etwaiger Lenkwinkeleinschlag oder die Giergeschwindigkeit berücksichtigt werden, so dass quasi prognostiziert wird, wie die Kurvenfahrt des Kraftfahrzeugs weiterverlaufen würde. Dies ist durch die ebenfalls gestrichelten Linien, die die Fahrzeugabschnitte 10a, 10b fortsetzen, dargestellt. In diesem Fall würde sich im gezeigten Beispiel kein Kreuzungspunkt mit der Fahrbahnmarkierung 12 in absehbarer Zeit ergeben. In jedem Fall aber unterbleibt die Gabe des Warnsignals, da das Kraftfahrzeugs hinreichend weit von einer etwaigen Fahrbahnmarkierung beabstandet ist.

## Patentansprüche

1. Kraftfahrzeug mit einer Einrichtung zur Erfassung von Fahrbahnmarkierungen sowie zum Ausgeben einer Warninformation in Abhängigkeit der Position des Kraftfahrzeugs bezüglich einer Fahrbahnmarkierung,
**dadurch gekennzeichnet,**
**dass** die Einrichtung (2) zum Ermitteln der Position je eines ausgewählten Fahrzeugabschnitts (10a, 10b) im Bereich der rechten und im Bereich der linken Fahrzeughälfte bezüglich derselben Fahrbahnmarkierung (12a, 12b) sowie zum Geben separater, seitenspezifischer Warninformationen bei Ermittlung einer die Informationsgabe auslösenden Position des einen oder anderen seitenspezifischen Fahrzeugabschnitts (10a, 10b) bezüglich derselben Fahrbahnmarkierung (12a, 12b) ausgebildet ist, so dass zwei Warninformationen ausgebbar sind, eine erste, wenn sich der eine Fahrzeugabschnitt in einer die Informationsgabe auslösenden Position befindet und nachfolgend eine zweite, wenn der andere Fahrzeugabschnitt ebenfalls eine die Informationsgabe auslösende Position bezüglich derselben Fahrbahnmarkierung einnimmt.

2. Kraftfahrzeug nach Anspruch 1,
**dadurch gekennzeichnet,**
**dass** als Fahrzeugabschnitt (10a, 10b) die rechte oder linke Fahrzeugaußenkante oder ein rechter oder linker Fahrzeugreifen berücksichtigt wird.

3. Kraftfahrzeug nach Anspruch 1 oder 2,
**dadurch gekennzeichnet,**
**dass** die Einrichtung (2) eine Kamera (3) und eine Bildverarbeitungseinrichtung (5) zum kontinuierlichen Aufnehmen des Fahrzeugvorfelds, zum Erfassen einer im Bild gezeigten Fahrbahnmarkierung (12a, 12b) sowie zum kontinuierlichen Ermitteln der Position eines ausgewählten Fahrzeugabschnitts (10a, 10b) bezüglich der Fahrbahnmarkierung (12a, 12b) aufweist.

4. Kraftfahrzeug nach Anspruch 3,
**dadurch gekennzeichnet,**
**dass** die Einrichtung (2) zum Ermitteln der Zeitspanne, bis sich der näher zur Fahrbahnmarkierung (12a, 12b) befindliche Fahrzeugabschnitt (10a, 10b) in einer die Warninformationsgabe auslösenden Position befindet, unter Berücksichtigung wenigstens eines Fahrparameters ausgebildet ist, wobei die Gabe der Warninformation erfolgt, wenn die Zeitspanne gleich einer vorgegebenen Mindestzeitspanne ist.

5. Kraftfahrzeug nach Anspruch 4,
**dadurch gekennzeichnet,**
**dass** die Einrichtung (2) zur Berücksichtigung einer zusätzlichen Zeitspanne oder eines Zeitfaktors, ausgebildet ist, wobei die zusätzliche Zeitspanne additiv mit der Mindestzeitspanne verknüpft wird, oder der Zeitfaktor mit der Mindestzeitspanne multipliziert wird, und wobei die Berücksichtigung in Abhängigkeit wenigstens eines Fahrzeugparameters erfolgt.

6. Kraftfahrzeug nach Anspruch 3,
**dadurch gekennzeichnet,**
**dass** die Einrichtung (2) zum Ermitteln der Wegstrecke, bis sich der näher zur Fahrbahnmarkierung (12a, 12b) befindliche Fahrzeugabschnitt (10a, 10b) in einer die Warninformationsgabe auslösenden Position befindet, unter Berücksichtigung wenigstens eines Fahrparameters ausgebildet ist, wobei die Gabe der Warninformation erfolgt, wenn die Wegstrecke gleich einer vorgegebenen Mindestwegstrecke ist.

7. Kraftfahrzeug nach Anspruch 6,
**dadurch gekennzeichnet,**
dann die Einrichtung (2) zur Berücksichtigung einer zusätzlichen Wegstrecke oder eines Wegfaktors ausgebildet ist, wobei die zusätzliche Wegstrecke additiv mit der Mindestwegstrecke verknüpft wird, oder der Wegfaktor mit der Mindestwegstrecke multipliziert wird, und wobei die Berücksichtigung in Abhängigkeit wenigstens eines Fahrzeugparameters erfolgt.

8. Kraftfahrzeug nach Anspruch 5 oder 7,
**dadurch gekennzeichnet,**
**dass** die Berücksichtigung in Abhängigkeit der Geschwindigkeit des Fahrzeugs (1) und/oder des Gierwinkelfehlers des Fahrzeugs (1) erfolgt.

9. Kraftfahrzeug nach einem der vorangehenden Ansprüche,
**dadurch gekennzeichnet,**
**dass** die seitenspezifischen Warninformationen unterschiedlich sind.

10. Kraftfahrzeug nach einem der vorangehenden Ansprüche
**dadurch gekennzeichnet,**
**dass** die Warninformationen akustischer, optischer oder haptischer Art sind.

## Claims

1. Vehicle with a device for detecting road markings as well as emitting warning information depending on the position of the vehicle with reference to a road marking,
**characterised in that**
the device (2) for determining the position of a selected vehicle section (10a, 10b) in the area of the right and in the area of the left vehicle halves with reference to the same road marking (12a, 12b) as well as giving separate, side-specific warning information whilst determining the position of one or other side specific vehicle sections (10a, 10b) with reference to the same road marking (12a, 12b), which activates the provision of information is designed so that two pieces of warning information can be emitted, a first one if the vehicle section is located in a position, which activates provision of the information and subsequently a second one if the other vehicle section likewise takes up a position with reference to the same road marking, which activates the provision of information.

2. Vehicle according to claim 1,
**characterised in that**
the right or left outside edge of the vehicle or a right or left vehicle tyre is considered as being the vehicle section (10a, 10b).

3. Vehicle according to claim 1 or 2,
**characterised in that**
the device (2) has a camera (3) and an image processing device (5) for continuous recording of the front region of the vehicle for detecting a road marking (12a, 12b) shown as an image as well as for continuous detection of the position of a selected vehicle section (10a, 10b) with reference to the road marking (12a, 12b).

4. Vehicle according to claim 3,
**characterised in that**
the device (2) for detecting the period of time until the vehicle section (10a, 10b) located closer to the road marking (12a, 12b) is located in a position activating the provision of warning information, is designed taking into account at least one driving parameter, in which the provision of warning information occurs if the period of time is equal to a preset minimum period of time.

5. Vehicle according to claim 4,
**characterised in that**
the device (2) is designed to take into account an additional period of time or a time factor, in which the additional period of time is additively combined with the minimum period of time or the time factor is multiplied by the minimum period of time and in which the taking into account occurs depending on at least one vehicle parameter.

6. Vehicle according to claim 3,
**characterised in that**
the device (2) for detecting the distance until the vehicle section (10a, 10b) located closer to the road marking (12a, 12b) is located in a position activating the provision of warning information is designed taking into account at least one driving parameter, in which the provision of warning information occurs if the distance is equal to a preset minimum distance.

7. Vehicle according to claim 6,
**characterised in that**
the device (2) is designed to take into account an additional distance or distance factor, in which the additional distance is additively combined with the minimum distance or the distance factor is multiplied by the minimum distance and in which the taking into account occurs depending on at least one vehicle parameter.

8. Vehicle according to claim 5 or 7,
**characterised in that**
the taking into account occurs depending on the speed of the vehicle (1) and / or the yaw angle error of the vehicle (1).

9. Vehicle according to one of the previous claims,
**characterised in that**
the side specific pieces of warning information are different.

10. Vehicle according to one of the previous claims,
**characterised in that**
the warning information is of an acoustic, optical or haptic type.

## Revendications

1. Véhicule automobile avec un dispositif de détection des lignes de marquage de voie ainsi que d'émission d'une information d'avertissement en fonction de la position dudit véhicule automobile par rapport à une ligne de marquage de voie
**caractérisé en ce que** le dispositif (2) permettant la détection de la position de respectivement une section du véhicule (10a, 10b) dans le secteur de la moitié droite du véhicule et dans le secteur de la moitié gauche du véhicule par rapport à la même ligne de marquage de voie (12a, 12b) ainsi que pour l'émission des informations d'avertissement séparées spécifiques aux côtés lors de la détermination d'une position déclenchant l'émission de l'information de l'une ou de l'autre section du véhicule automobile spécifique au côté (10a, 10b) par rapport à la même ligne de marquage de voie (12a, 12b) est développé de telle sorte que deux informations d'avertissement peuvent être émises, une première lorsque l'une des sections du véhicule automobile se trouve dans une position déclenchant l'émission d'information et par la suite une seconde, lorsque l'autre section du véhicule automobile occupe une position déclenchant l'émission d'information par rapport à la même ligne de marquage de voie, tandis que, lorsque la ligne de marquage de voie (12a,12b) se trouve entre les deux sections du véhicule automobile, aucun signal d'avertissement ne sera donné.

2. Véhicule automobile selon la revendication 1,
**caractérisé en ce que**
le bord extérieur droit ou gauche du véhicule automobile ou une roue droite ou gauche du véhicule automobile est pris en considération comme section du véhicule automobile (10a, 10b).

3. Véhicule automobile selon la revendication 1 ou 2,
**caractérisé en ce que**
le dispositif (2) présente une caméra (3) et une unité de traitement de l'image (5) pour une réception continue de la zone amont du véhicule automobile, pour la détection d'une ligne de marquage de voie (12a, 12b) montrée sur l'image ainsi que pour la détermination continue de la position d'une section choisie du véhicule automobile (10a, 10b) par rapport à la ligne de marquage de la voie (12a, 12b).

4. Véhicule automobile selon la revendication 3,
**caractérisé en ce que**
le dispositif (2) est développé pour la détermination de la plage de temps jusqu'à ce que la section du véhicule automobile (10a, 10b) se trouvant le plus près de la ligne de marquage de la voie (12a, 12b) se trouve dans une position de déclenchement de l'émission d'information d'avertissement, sous considération d'au moins un paramètre de conduite, l'émission de l'information d'avertissement étant effectuée lorsque la plage de temps est identique à une plage de temps minimum prédéterminée.

5. Véhicule automobile selon la revendication 4,
**caractérisé en ce que**
le dispositif (2) est développé pour la prise en considération d'une plage de temps supplémentaire ou d'un facteur de temps, la plage de temps supplémentaire étant combinée en plus avec la plage de temps minimum, ou bien le facteur de temps étant multiplié par la plage de temps minimum et la prise en compte étant effectuée en fonction d'au moins un paramètre du véhicule automobile.

6. Véhicule automobile selon la revendication 3,
**caractérisé en ce que**
le dispositif (2) est développé pour déterminer la trajectoire jusqu'à ce que la section du véhicule automobile (10a, 10b) se trouvant le plus près de la ligne de marquage de la voie (12a, 12b) se trouve dans une position de déclenchement de l'émission d'information d'avertissement, sous considération d'au moins un paramètre de conduite, l'émission de l'information d'avertissement étant effectuée lorsque la trajectoire est identique à une trajectoire minimum prédéterminée.

7. Véhicule automobile selon la revendication 6,
**caractérisé en ce que**
le dispositif (2) est développé pour la prise en considération d'une trajectoire supplémentaire ou d'un facteur de parcours, la trajectoire supplémentaire étant combinée en plus avec la trajectoire minimum, ou bien le facteur de parcours étant multiplié par la trajectoire minimum et la prise en compte étant effectuée en fonction d'au moins un paramètre du véhicule automobile.

8. Véhicule automobile selon la revendication 5 ou 7,
**caractérisé en ce que**
la prise en compte est effectuée en fonction de la vitesse du véhicule automobile (1) et / ou du défaut d'angle d'embardée du véhicule automobile (1).

9. Véhicule automobile selon l'une des revendications précédentes,
**caractérisé en ce que**
les informations d'avertissement spécifiques aux côtés sont différentes.

10. Véhicule automobile selon l'une des revendications précédentes,
**caractérisé en ce que**
les informations d'avertissement sont acoustiques, optiques ou haptiques.
